(19) Europäisches Patentamt
European Patent Office
Office européen des brevets

(11) **EP 4 155 328 A1**

(12) **EUROPEAN PATENT APPLICATION**

(43) Date of publication:
**29.03.2023 Bulletin 2023/13**

(21) Application number: **21198602.1**

(22) Date of filing: **23.09.2021**

(51) International Patent Classification (IPC):
***C08F 210/06*** *(2006.01)* ***C08L 23/14*** *(2006.01)*
***C08F 2/00*** *(2006.01)* ***C08F 4/659*** *(2006.01)*

(52) Cooperative Patent Classification (CPC):
(C-Sets available)
**C08F 210/06; C08L 23/142;** C08L 2205/025;
C08L 2308/00; C08L 2314/06 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **WANG, Jingbo**
**4021 Linz (AT)**
- **Gahleitner, Markus**
**4021 Linz (AT)**
- **BERNREITNER, Klaus**
**4021 Linz (AT)**
- **Leskinen, Pauli**
**06101 Porvoo (FI)**
- **DELAVIERE, Lionel**
**92400 Courbevoie (FR)**
- **WUST, Pascal**
**Burghausen 84489 (DE)**

(74) Representative: **Kador & Partner PartG mbB**
**Corneliusstraße 15**
**80469 München (DE)**

(54) **PROPYLENE-BUTENE RANDOM COPOLYMER COMPOSITION WITH LOW EXTRACTABLE CONTENT**

(57) A propylene-butene random copolymer composition comprising 98 to 99.99 wt% of a propylene-butene random copolymer based on the total weight of the propylene-butene random copolymer composition, and 0.01 to 1 wt% based on the total weight of propylene-butene random copolymer composition of an alpha nucleating agent, the composition having a melt flow rate $MFR_2$ (230 °C/2.16 kg) measured according to ISO 1133 in the range of from 20.0 to below 150.0 g/10 min a butene content in the range of from 4.0 to 8.5 wt% based on the total weight of the propylene-butene random copolymer, and a relative amount of <2,1> erythro regio-defects in the range of from 0.01 to 1.2 mol%, determined by quantitative $^{13}C$ NMR spectroscopy, as described herein.

Fig. 1a Loop H2/C3 (mol/kmol)

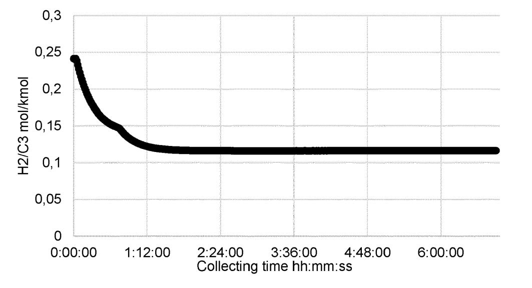


Fig. 1b Loop C2/C3 (mol/kmol)

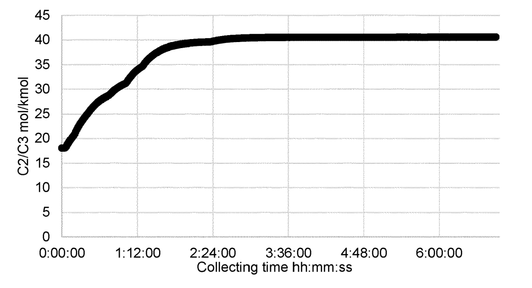


EP 4 155 328 A1

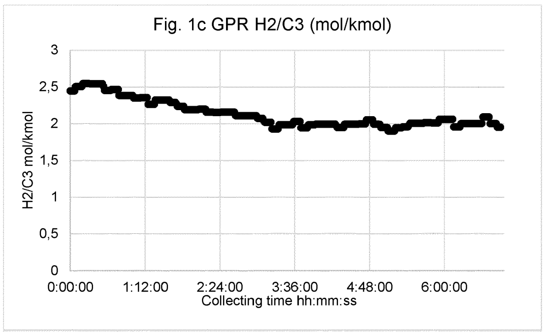


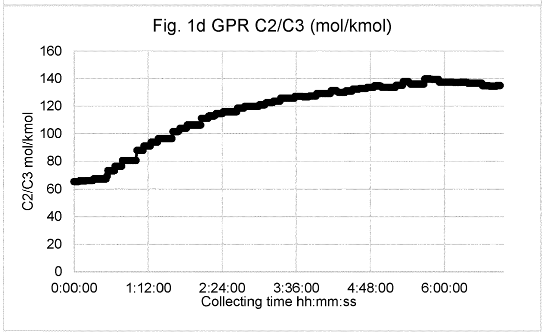


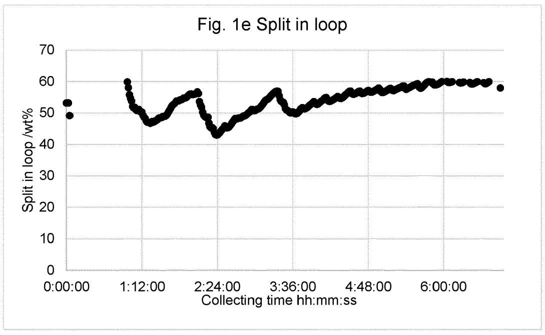


(52) Cooperative Patent Classification (CPC): (Cont.)

C-Sets
**C08F 210/06, C08F 2/001;**
**C08F 210/06, C08F 4/65927;**
**C08L 23/142, C08L 23/142;**
C08F 210/06, C08F 210/08, C08F 2500/12, C08F 2500/27, C08F 2500/33, C08F 2500/34, C08F 2500/31, C08F 2500/35

## Description

The present invention provides a propylene-butene random-copolymer composition having good stiffness, impact strength, and optical properties in combination with low extractable content. In particular, the present invention relates to moulded articles comprising said propylene-butene random-copolymer composition.

## Background

Polypropylene based copolymers like propylene-ethylene copolymers are widely used in moulding applications, such as thin wall packaging applications, which require a combination of good mechanical properties - e.g. high stiffness and impact strength - and optical properties.

Meeting the demands can be challenging, since many polymer properties are directly or indirectly interrelated. Often, improving a specific property can only be accomplished at the expense of another property. Stiffness can, for instance, be improved by increasing the crystallinity and/or the relative amount of homopolymer within the composition. However, the consequence of such modifications is that the material becomes more brittle, thereby resulting in poor impact properties and/or worse optical properties.

Impact behaviour or optical properties can be improved by increasing the comonomer content. Consequently, the material will become softer and will have reduced stiffness. Thus, impact or optical properties such as haze behave in a conflicting manner to stiffness.

Moreover, processability is linked with the viscosity or flowability of a polymer: especially for thin walled articles, complex tool design or fast production cycle a good flowability in the sense of a high MFR is essential. At the same time it is well known, that polymers with high MFRs tend to become more brittle in the sense of low impact strength, especially at low temperatures.

In further applications, such as food or medical packaging, another requirement for the composition used for the packaging articles, e.g. thin-wall packaging articles, is a low content of extractables, often referred to as xylene cold soluble fraction (XCS). Reason is that the food or medical articles packaged by the thin-wall packaging articles should themselves not be altered in their composition or should not be contaminated by any material from the packaging composition either by evaporated material or by material transferred by contact. Usually, such transferrable material is reflected by the content of extractables. Therefore, a low content of extractables in the composition is required.

EP 1 442 078 B1 describes propylene polymer compositions comprising from 15 to 60 wt.% of a copolymer of propylene with C4-C8 alpha-olefin(s) containing more than 10 wt.%, but less than 14 wt%, of said C4-C8 alpha-olefin(s), from 40 to 85 wt.% of a copolymer of propylene with C4-C8 alpha-olefin(s), containing from 14 to 30 wt.% of said C4-C8 alpha-olefin(s), and optionally from 0.5 to 3 wt.% of ethylene, provided that the total content of C4-C8 alpha-olefin(s) in the propylene polymer composition be higher than 10 wt.%. The xylene soluble content in the examples is more than 8 wt.% of the total composition. Furthermore, the polymers were produced using Ziegler Natta catalysts. Furthermore, the melt flow index is rather low with 2 to 15 g/10 min and thus the processability not good. Furthermore, the comonomer content is high (more than 13 wt.%).

WO 2020/099566 (A1) discloses a multimodal propylene butene random copolymer having a melt flow rate ($MFR_2$) of 1.0 to 20.0 g/10 min and a butene content of 1.5 to 8.0 wt.%, wherein said copolymer is prepared using a single site catalyst and wherein said copolymer comprises 30 to 70 wt.% of a propylene butene copolymer having an $MFR_2$ of 0.5 to 20.0 g/10 min and a butene content of 0.5 to 10.0 wt.% and 70 to 30 wt.% of a propylene butene copolymer having an $MFR_2$ of 0.5 to 20.0 g/10 min and a butene content of 1.0 to 8.0 wt.%. However, the disclosed composition has a low processability.

WO 2020/099563 (A1) covers a multimodal propylene butene random copolymer having a melt flow rate ($MFR_2$) of 1.0 to 20.0 g/10 min and a butene content of 5.0 to 20.0 wt.%, wherein said copolymer is prepared using a single site catalyst and wherein said copolymer comprises 30 to 70 wt.% of a propylene butene copolymer (A) having an $MFR_2$ of 0.5 to 20.0 g/10 min and a butene content of 2.0 to 10.0 wt.%; and 70 to 30 wt.% of a propylene butene copolymer having an $MFR_2$ of 0.5 to 20.0 g/10 min and a butene content of 4.0 to 20.0 wt.%. However, the disclosed composition has a low processability.

EP 3 257 878 A1 discloses a nucleated propylene-butylene-copolymer which has been produced in the presence of a Ziegler-Natta catalyst and is free of phthalic acid esters as well as their respective decomposition products, and comprises - based on the total weight of the propylene-butylene copolymer 0 - 96.0 wt.% of propylene 4.0 - 12.0 wt.% of 1-butylene, wherein the nucleated propylene-butylene copolymer is further characterised by a molecular weight distribution (MWD) of at least 5.0 when measured according to ISO16014 and fulfils any of the following requirements: Flexural Modulus of at least 1000 MPa when measured according to IS0178 or Notched Impact strength of at least 3.0 $kJ/m^2$ when measured according to ISO 179/1eA +23 °C or Haze of at most 21.0 % when measured according to ASTM 1003-D on 1mm plaques or ratio of Flex Modulus/Haze of at least 60 MPa/% or an optomechanical ability or a process focused optomechanical ability of at least 200. However, the content of extractables in the disclosed composition is still

high.

It is therefore apparent that there is still the need for a polypropylene composition for thin-walled packaging in the area of food and medical packaging having good mechanical and optical properties, improved processability and low contents of extractables.

## Object of the invention

It is therefore an object of the present invention to find a polymer composition, in particular a polypropylene polymer composition, having the ability to be processed to thin-walled articles, whereas the food and/or medical items packaged by such films will not get in content with volatile compounds released from the composition forming the thin-walls of the packaging article, and whereas the polypropylene polymer composition allows for safe, uncomplicated and reliable processing to such article.

It is thus in particular an object of the present invention to find a polypropylene composition having an improved balance of mechanical properties, optical properties, processability and low extractable contents.

## Summary of the invention

It now has been surprisingly found that above-mentioned object is achieved by a propylene-butene random copolymer composition comprising 98 to 99.99 wt.% of a propylene-butene random copolymer based on the total weight of the propylene-butene random copolymer composition, and 0.01 to 1 wt% based on the total weight of propylene-butene random copolymer composition of an alpha nucleating agent, the composition having a melt flow rate $MFR_2$ (230 °C/2.16 kg) measured according to ISO 1133 in the range of from 20.0 to below 150.0 g/10 min a butene content in the range of from 4.0 to 8.5 wt.% based on the total weight of the propylene-butene random copolymer, and a relative amount of <2,1> erythro regio-defects in the range of from 0.01 to 1.2 mol%, determined by quantitative $^{13}C$ NMR spectroscopy, as described herein.

It has been further surprisingly found out that above-mentioned object is achieved by an article comprising a propylene-butene random copolymer composition comprising 98 to 99.99 wt.% of a propylene-butene random copolymer based on the total weight of the propylene-butene random copolymer composition, and 0.01 to 1 wt% based on the total weight of propylene-butene random copolymer composition of an alpha nucleating agent, the composition having a melt flow rate $MFR_2$ (230 °C/2.16 kg) measured according to ISO 1133 in the range of from 20.0 to below 150.0 g/10 min a butene content in the range of from 4.0 to 8.5 wt.% based on the total weight of the propylene-butene random copolymer, and a relative amount of <2,1> erythro regio-defects in the range of from 0.01 to 1.2 mol%, determined by quantitative $^{13}C$ NMR spectroscopy, as described herein.

It has been further surprisingly found out that above-mentioned object is achieved by the use of a propylene-butene random copolymer composition comprising 98 to 99.99 wt.% of a propylene-butene random copolymer based on the total weight of the propylene-butene random copolymer composition, and 0.01 to 1 wt% based on the total weight of propylene-butene random copolymer composition of an alpha nucleating agent for injection moulding and packing applications, the composition having a melt flow rate $MFR_2$ (230 °C/2.16 kg) measured according to ISO 1133 in the range of from 20.0 to below 150.0 g/10 min a butene content in the range of from 4.0 to 8.5 wt.% based on the total weight of the propylene-butene random copolymer, and a relative amount of <2,1> erythro regio-defects in the range of from 0.01 to 1.2 mol%, determined by quantitative $^{13}C$ NMR spectroscopy, as described herein.

## Definitions

The term *'copolymer of [monomer]'* as used herein denotes a polymer the majority by weight of which derives from the [monomer] units (i.e. at least 50 wt% [monomer] relative to the total weight of the copolymer).

As used herein the term *'moulded article'* denotes articles that are produced by any conventional moulding technique, e.g. injection moulding, stretch moulding, compression moulding, rotomoulding or injection stretch blow moulding. Articles produced by injection moulding, stretch moulding, or injection stretch blow moulding are preferred. Articles produced by injection moulding are especially preferred. The moulded articles preferably are thin-walled articles having a wall thickness of 300 $\mu$m to 2 mm. More preferably, the thin-walled articles have a wall thickness of 300 $\mu$m to 1400 $\mu$m, and even more preferably, the thin-walled articles have a wall thickness of 500 $\mu$m to 900 $\mu$m. The moulded articles of the current invention can be containers, such as cups, buckets, beakers, trays or parts of such articles, such as see-through-windows, lids, or the like.

## Brief description of the Figures

Figures 1a-e shows the time course of individual process parameters during the production of base polymer

CC1 of example CE1.

**Description of the invention**

In the following, the propylene-butene random copolymer composition, the preparation process thereof and the article made therefrom are described in detail.

Propylene-butene random copolymer composition

In the most general embodiment of the present invention, the propylene-butene random copolymer composition comprises 98 to 99.99 wt.% of a propylene-butene random copolymer (A) based on the total weight of the propylene-butene random copolymer composition, and 0.01 to 1 wt% based on the total weight of propylene-butene random copolymer composition of an alpha nucleating agent, the composition having a melt flow rate $MFR_2$ (230 °C/2.16 kg) measured according to ISO 1133 in the range of from 20.0 to below 150.0 g/10 min a butene content in the range of from 4.0 to 8.5 wt.% based on the total weight of the propylene-butene random copolymer, and a relative amount of <2,1> erythro regio-defects in the range of from 0.01 to 1.2 mol%, determined by quantitative $^{13}C$ NMR spectroscopy, as described herein.

The propylene-butene random copolymer composition preferably has a crystallisation temperature $T_c$, determined by DSC according to ISO 11357-3:1999, of more than 110 °C, more preferably from 110 °C to 135 °C and most preferably from 115 °C to 125 °C.

The propylene-butene random copolymer composition preferably has a melting temperature $T_m$, determined by DSC according to ISO 11357-3:1999, of more than 110 °C, more preferably from 110 °C to 160 °C and most preferably from 135 °C to 150 °C.

Preferably, the propylene-butene random copolymer composition has a xylene soluble content (XCS) of less than 3.0 wt.%, more preferably at most 1.4 wt.%, even more preferably at most 1.0 wt.%, and most preferably at most 0.5 wt.%. A preferable lower limit for the XCS is 0.1 wt.%, even more preferably 0.2 wt.%.

The propylene-butene random copolymer composition preferably has a melt flow rate $MFR_2$ (230°C) of 20.0 to 150.0 g/10 min, more preferably of from 30.0 to 140.0 g/10 min, and most preferably of 40.0 to 125.0 g/10 min.

Preferably, the propylene-butene random copolymer composition according to the present invention has a Flexural modulus of 1100 to 1600 MPa, more preferably of 1250 to 1580 MPA, even more preferably of 1300 to 1560 MPa, and most preferably of 1400 to 1550 MPa.

In a preferred embodiment of the invention, the propylene-butene random copolymer composition has a Charpy notched index strength (NIS (23 °C)) of 1.8 to 10.0 kJ/$m^2$, preferably of 1.9 to 5.0 kJ/$m^2$, more preferably of 2.0 to 4.0 kJ/$m^2$, and most preferably of 2.0 to 3.4 kJ/$m^2$.

The haze measured on a 1 mm plaque of the propylene-butene random copolymer composition according to the present invention is preferably not higher than 15%, more preferably not higher than 12%, even more preferably not higher than 11.3%, still more preferably not higher than 8% and most preferably not higher than 6%. Usually, the haze is not lower than 3%.

The propylene-butene random copolymer composition according to the present invention preferably has an optomechnical ability at +23 °C (OMA (+23 °C)) of more than 260 kJMPa/$m^2$, more preferably of more than 270 kJMPa/$m^2$, and most preferably of more than 700 kJMPa/$m^2$. Usually, the optomechnical ability at +23 °C (OMA (+23 °C)) of the propylene-butene random copolymer composition according to the present invention is not higher than 3500 kJMPa/$m^2$.

Preferably, the composition can comprise further additives such as stabilizers (C), emulsifiers (D), optical brightening agents (E) and/or crosslinking agents (F). Particularly preferred embodiments of the present invention are directed towards propylene-butene random copolymer compositions according to the present invention having a haze of 3.0 to 10.0% and/or an optomechnical ability at +23 °C (OMA (+23 °C)) from 2000 to 3500 kJMPa/$m^2$.

*Propylene-butene random copolymer (A)*

The propylene-butene random copolymer is a propylene copolymer. The comonomer is butene. The butene content in the propylene-butene random copolymer is in the range of from 3.5 to 8.5 wt.%, preferably of from 3.8 to 7.0 wt.%, and more preferably of from 4.0 to 6.0 wt.%.

Preferably, the propylene-butene random copolymer is obtainable by a polymerisation process using a single-site catalyst (SSC). More preferably, the single site catalyst is a metallocene catalyst comprising a metallocene complex. Even more preferably, the metallocene complex comprises at least one cyclopentadienyl or indacenyl ligand. Still even more preferably, the metallocene complex is a hafnocene complex or a zirconocene complex. Most preferably, the propylene-butene random copolymer obtainable by a polymerisation process using a single-site catalyst according to the preferred embodiments as disclosed in the preparation process of the propylene-butene random copolymer as

provided herein.

Preferably, propylene and butene are the only monomers present in the propylene-butene random copolymer, i.e. butene is the only comonomer. It is especially preferred if the propylene-butene random copolymer is substantially free of ethylene, e.g. comprises less than 0.9 wt.% ethylene, preferably less than 0.5 wt.% ethylene, more preferably less than 0.1 wt.%, and most preferably less than 0.01 wt.%.

If present, comonomers different from butene may be ethylene or $C_{5-12}$, preferably $C_{5-10}$, alpha olefin comonomers, particularly singly or multiply ethylenically unsaturated comonomers, in particular $C_{5-10}$ alpha olefins such as 1-hexene, 1-octene, and 4-methyl-1-pentene. 1-hexene and 1-octene are preferred.

The propylene-butene random copolymer is preferably unimodal. More preferably, the polypropylene is bimodal, i.e. consists of two fractions, each comprising a polypropylene polymer (A1) and (A2).

The propylene-butene random copolymer preferably has a melt flow rate $MFR_2$ (230°C) of 20.0 to 150.0 g/10 min, and more preferably of from 40.0 to 140.0 g/10 min.

*Nucleating agents (B)*

The propylene-butene random copolymer composition of the present invention comprises at least one of a nucleating agent (D). Suitable nucleating agents are known in the art. Exemplary clarifying agents suitable for the current invention are disclosed in EP 1 989 252 B1. Preferably, said nucleating agent is soluble in the polymer melt of said propylene-butene random copolymer composition. More preferably, said nucleating agent comprises a substituted or unsubstituted dibenzylidene sorbitol compound and/ or a substituted or unsubstituted nonitol compound. The amount of said nucleating agent is in a range of from 0.01 to 1.0 wt.%, preferably from 0.1 to 0.8 wt.%, more preferably from 0.15 to 0.4 wt.%, based on the total weight of the propylene-butene random copolymer composition.

*Stabilizers (C) and antistatic agents (D)*

Preferably, the propylene-butene random copolymer composition of the present invention comprises one or more of a stabilizer (C) or an antistatic agent (D). Said optional stabilisers and/or antistatic agents may be present in a total amount of from 0.05 to 1.0 wt.% based on the total weight of the propylene-butene random copolymer composition. Stabilizers can be e.g. antioxidants.

*Optical brightening agents (E)*

Preferably, the said propylene-butene random copolymer composition comprises one or more optical brightening agent(s). The optical brightening agent(s) may be present in an amount of from 0.01 to 1.0 wt.%, preferably from 0.1 to 0.8 wt.%, more preferably from 0.15 to 0.4 wt.%, based on the total weight of the propylene-butene random copolymer composition.

Suitable optical brightener(s) are known in the art. For example, EP 1 989 252 B1 discloses a selection of optical brighteners suitable for the present invention.

Preferably, an optical brightener is present in the propylene-butene random copolymer composition and comprises a water insoluble pigment.

Preparation of the propylene-butene random copolymer composition

The heterophasic polyolefin composition of the invention may be prepared by any suitable method. Ideally, a method is used which produces a homogenous mixture of the various components. Typically, compounding is employed. Compounding usually involves mixing or/and blending the various components in a molten state, often by extrusion.

*Preparation of the propylene-butene random copolymer*

The propylene-butene random copolymer may be prepared by any known process in the art. However, preferably, the propylene-butene random copolymer is produced in a multistage process wherein propylene-butene copolymers (A1) and (A2) are produced in subsequent stages. The properties of the propylene-butene copolymer (A2) produced in a higher stage of the multistage process may be calculated as follows.

The $MFR_2$ of the propylene-butene copolymer (A2), produced in the second reactor is determined according to equation (2):

$$\log(MFR\ (A2)) = \frac{\log(MFR\ (A)) - w(A1)*\log(MFR(A1))}{w(A2)} \quad \text{equation (2)}$$

wherein

*MFR(A)* is the $MFR_2$ of the propylene-butene random copolymer

*w(A1)* and *w(A2)* are the weight fractions of the propylene-butene copolymers (A1) and (A2) in the propylene-butene random copolymer *MFR(A1)* is the $MFR_2$ of the propylene-butene copolymer (A1) produced in the first reactor.

Thus, although not directly measurable on the multistage process products, the properties of the propylene butene copolymers produced in higher stages of such a multistage processes may be determined by applying the above method.

Multimodal propylene copolymers produced in a multistage process are also designated as *'in-situ'* blends. The resulting end product consists of an intimate mixture of the polymers from the two or more reactors. These two polymers may have different molecular-weight-distribution curves, and/or they may differ in terms of comonomer content or type. The end product thus contains a mixture or two or more polymers with differing properties, i.e. it is a multimodal polymer mixture

In a particularly preferred embodiment, the multimodal propylene copolymer is prepared by a process comprising:

(i) polymerising propylene and butene in a first polymerisation stage in the presence of a single site catalyst to prepare a first propylene-butene copolymer having a $MFR_2$ from 0.01 to 300 g/10 min, preferably 25 to 200 g/10 min, and most preferably 30 to 150 g/10 min, and a butene content of 3.0 to 6.0 wt.%, preferably 3.5 to 5.5 wt.%;

(ii) polymerising propylene and butene in a second polymerisation stage in the presence of said catalyst and said first propylene-butene copolymer to prepare said multimodal propylene-butene copolymer.

The first polymerisation stage is preferably a slurry polymerisation step. The slurry polymerisation usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amount of methane, ethane and/or butane.

The temperature in the first polymerisation stages is typically from 60 to 100 °C, preferably from 65 to 90 °C, most preferably from 70 to 80 °C. An excessively high temperature should be avoided to prevent partial dissolution of the polymer into the diluent and the fouling of the reactor. The pressure is from 1 to 150 bar, preferably from 40 to 80 bar, most preferably from 47 to 55 bar.

The slurry polymerisation may be conducted in any known reactor used for slurry polymerisation. Such reactors include a continuous stirred tank reactor and a loop reactor. It is especially preferred to conduct the polymerisation in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerisation stage as a slurry polymerisation in a loop reactor.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerisation stage continuously.

Hydrogen is typically introduced into the first polymerisation stage for controlling the $MFR_2$ of the propylene-butene random copolymer. The amount of hydrogen needed to reach the desired $MFR_2$ depends on the catalyst used and the polymerisation conditions, as will be appreciated by the skilled worker.

The average residence time in the first polymerisation stage is typically from 20 to 120 minutes, preferably from 30 to 80 minutes. As it is well known in the art the average residence time $\tau$ can be calculated from equation (3) below:

$$\tau = \frac{V_R}{Q_o} \text{ equation (3)}$$

wherein

$V_R$ is the volume of the reaction space (in case of a loop reactor, the volume of the reactor, in case of the fluidized bed reactor, the volume of the fluidized bed)
$Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the propylene feed rate.

The second polymerisation stage is preferably a gas phase polymerisation step, i.e. carried out in a gas-phase reactor. Any suitable gas phase reactor known in the art may be used, such as a fluidised bed gas phase reactor.

For gas phase reactors, the reaction temperature used will generally be in the range 60 to 115 °C, preferably 70 to 110 °C, the reactor pressure will generally be in the range 10 to 35 bar, preferably 20 to 30 bar, and the residence time will generally be 1 to 8 hours. The gas used will commonly be a non-reactive gas such as nitrogen or low boiling point hydrocarbons such as propane together with monomer (e.g. ethylene).

A chain transfer agent (e.g. hydrogen) is typically added to the second polymerisation stage.

The split between the first and second polymerisation stages may be in the range 20:80 to 80:20, preferably 25:75 to 75:25, more preferably 60:40 to 75:25, and most preferably 40:60 to 60:40.

A preferred multistage process is the above-identified slurry-gas phase process, such as developed by Borealis and known as the Borstar® technology. In this respect, reference is made to the EP applications EP 0 887 379 A1 and EP 0 517 868 A1.

The polymerisation steps discussed above may be preceded by a prepolymerisation step. The purpose of the prepolymerisation is to polymerise a small amount of polymer onto the catalyst at a low temperature and/or a low monomer concentration. By prepolymerisation it is possible to improve the performance of the catalyst in slurry and/or modify the properties of the final polymer. The prepolymerisation step is typically conducted in slurry.

Thus, the prepolymerisation step may be conducted in a loop reactor. The prepolymerisation is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerisation step is typically from 0 to 90 °C, preferably from 15 to 40 °C and more preferably from 18 to 28 °C.

The pressure is not critical and is typically from 1 to 150 bar, preferably from 40 to 80 bar.

The amount of monomer is typically such that from 0.1 to 1000 grams of monomer per one gram of solid catalyst component is polymerised in the prepolymerisation step. As the person skilled in the art knows, the catalyst particles recovered from a continuous prepolymerisation reactor do not all contain the same amount of prepolymer. Instead, each particle has its own characteristic amount which depends on the residence time of that particle in the prepolymerisation reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerisation step when a prepolymerisation step is present. However, where the solid catalyst component and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is understood within the scope of the invention, that the amount of polymer produced in the prepolymerisation typically lies within 1.0 - 5.0 wt.-% in respect to the final multimodal propylene butene copolymer.

The multimodal propylene butene random copolymer is prepared in the presence of a single site catalyst (which term encompasses a metallocene and a non-metallocene catalyst). These terms have a well-known meaning. Most preferably, the catalyst is a metallocene

Any metallocene catalyst capable of catalysing the formation of an olefinic polymer can be used. A suitable

metallocene catalyst comprises a metallocene/activator reaction product impregnated in a porous support at maximum internal pore volume. The catalyst complex comprises a ligand which is typically bridged, and a transition metal of group IVa to Via, and an organoaluminium compound. The catalytic metal compound is typically a metal halide.

Suitable metallocene compounds are those which have a formula $(Cp)_m R_n MR'_o X_p$, where Cp is an unsubstituted or substituted and/or fused homo or heterocyclopentadienyl, R is a group having 1-4 atoms and bridging two Cp rings, M is a transition metal of group 4, 5 or 6 in the Periodic Table of Elements (IUPAC, 1985), R' is $C_1$-$C_2$ hydrocarbyl or hydrocarboxy group and X is a halogen atom, wherein m is 1-3, n is 0 or 1, o is 0-3 and p is 0-3 and sum n+o+p corresponds the oxidation state of the transition metal M. The transition metal M is preferably zirconium, hafnium or titanium, most preferably zirconium.

Examples of suitable metallocene compounds include those of formula (I) or (II):

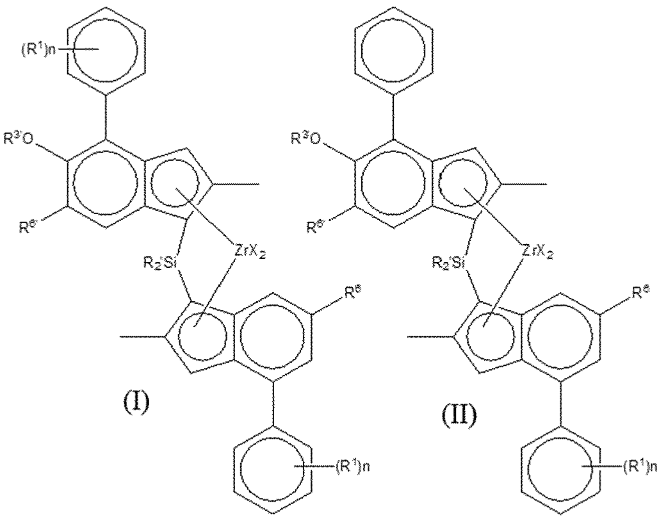

(I) (II)

wherein each X is a sigma ligand, preferably each X is independently a hydrogen atom, a halogen atom, $C_{1-6}$-alkoxy group, $C_{1-6}$-alkyl, phenyl or benzyl group;

R' is independently a $C_{1-6}$ alkyl or $C_{3-10}$ cycloalkyl;

$R^1$ is independently $C_{3-8}$ alkyl;

$R^6$ is hydrogen or a $C_{3-8}$ alkyl group;

$R^{6'}$ is a $C_{3-8}$ alkyl group or $C_{6-10}$ aryl group, preferably a tertiary $C_{4-8}$ alkyl group;

$R^{3'}$ is a $C_{1-6}$ alkyl group, or $C_{6-10}$ aryl group optionally substituted by one or more halo groups; and

n is independently 0, 1 or 2.

Particular metallocene compounds include:

| | | | |
|---|---|---|---|
| 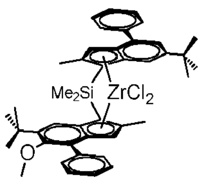 | 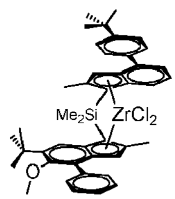 | 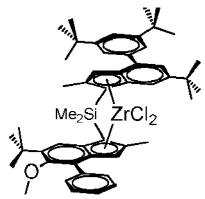 | 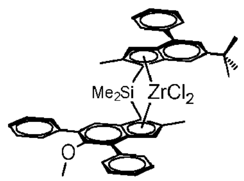 |
| rac-anti-$Me_2Si$(2-Me-4- | rac-anti-$Me_2Si$(2-Me-4- | rac-anti-$Me_2Si$(2-Me-4-(3,5-di- | rac-anti-$Me_2Si$(2-Me-4-Ph-6-*t*Bu- |

(continued)

| | | | |
|---|---|---|---|
| Ph-6-*t*Bu-Ind)(2-Me-4-Ph-5-OMe-6-*t*Bu-Ind) $ZrCl_2$ | (p-*t*BuPh)-Ind)(2-Me-4-Ph-5-OMe-6-*t*Bu-Ind) $ZrCl_2$ | *t*BuPh)-6-*t*Bu-Ind)(2-Me-4-Ph-5-OMe-6-*t*Bu-Ind)$ZrCl_2$ | Ind)(2-Me-4,6-di-Ph-5-OMe-Ind)$ZrCl_2$ |
| 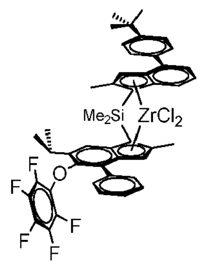 | 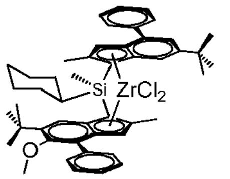 | 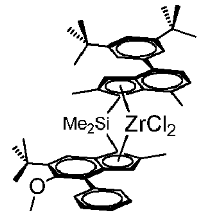 | 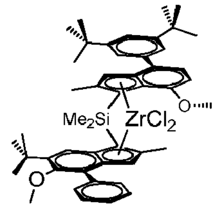 |
| rac-anti-$Me_2$Si(2-Me-4-(p-*t*BuPh)-Ind)(2-Me-4-Ph-5-$OC_6F_5$)-6-*i*Pr-Ind) $ZrCl_2$ | rac-anti-Me(CyHex)Si(2-Me-4-Ph-6-*t*Bu-Ind)(2-Me-4-Ph-5-OMe-6-*t*Bu-Ind)$ZrCl_2$ | rac-anti-$Me_2$Si(2-Me-4-(3,5-di-*t*BuPh)-7-Me-Ind)(2-Me-4-Ph-5-OMe-6-*t*Bu-Ind) $ZrCl_2$ | rac-anti-$Me_2$Si(2-Me-4-(3,5-di-*t*BuPh)-7-OMe-Ind)(2-Me-4-Ph-5-OMe-6-*t*Bu-Ind)$ZrCl_2$ |
| 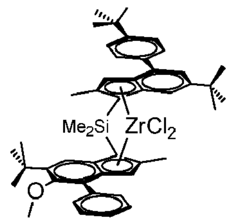 | 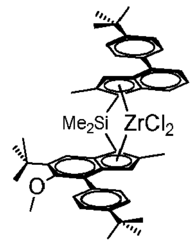 | 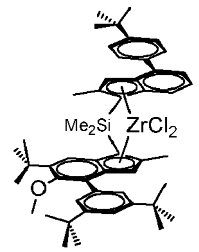 | 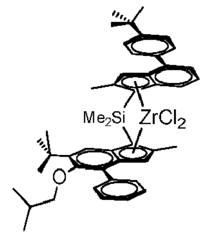 |
| rac-anti-$Me_2$Si(2-Me-4-(p-*t*BuPh)-6-*t*Bu-Ind)(2-Me-4-Ph-5-OMe-6-*t*Bu-Ind)$ZrCl_2$ | rac-anti-$Me_2$Si(2-Me-4-(p-*t*BuPh)-Ind)(2-Me-4-(4-*t*BuPh)-5-OMe-6-*t*Bu-Ind)$ZrCl_2$ | rac-anti-$Me_2$Si(2-Me-4-(p-*t*BuPh)-Ind)(2-Me-4-(3,5-*t*Bu2Ph)-5-OMe-6-*t*Bu-Ind) $ZrCl_2$ | rac-anti-$Me_2$Si(2-Me-4-(p-*t*BuPh)-Ind)(2-Me-4-Ph-5-OiBu-6-*t*Bu-Ind)$ZrCl_2$ |

Alternatively, the metallocene compound may be selected from:

rac-anti-dimethylsilanediyl[2-methyl-4,7-bis-(3',5'-dimethyl phenyl)-1,5,6,7-tetrahydro-s-indacen-1-yl][2-methyl-4-(3',5'-dimethylphenyl)-5-methoxy-6-tert-butylinden-1-yl] zirconium dichloride

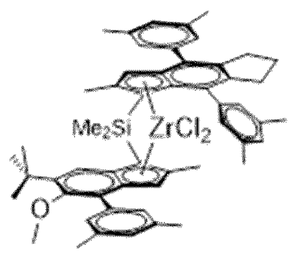

;

or

anti-dimethylsilanediyl[2-methyl-4-(3,5-dimethylphenyl)-5-methoxy-6-tert-butylinden-1-yl][2-methyl-4-(3,5-dimethylphenyl)-1,5,6,7-tetrahydro-s-indacen-1-yl]zirconium dichloride

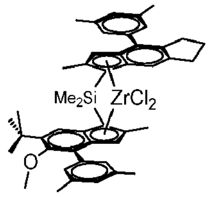

Most preferably rac-anti-$Me_2Si$(2-Me-4-(p-*t*BuPh)-Ind)(2-Me-4-Ph-5-OMe-6-$_t$Bu-Ind)$ZrCl_2$ is used.

Such metallocene catalysts are frequently used with catalyst activators or cocatalysts, e.g. alumoxanes such as methylaluminoxane, which are widely described in the literature.

The metallocene catalyst may be supported as is well known in the art. Any suitable support or carrier material can be used, which may be any porous, substantially inert support, such as an inorganic oxide or salt. In practice the support used is preferably a fine-grained inorganic oxide such as an inorganic oxide of an element of Group 2, 13 or 14 in the Periodic Table of Elements (IUPAC, 1985), most preferably silica, alumina or a mixture or derivative of these. Other inorganic oxides which can be used either alone or together with silica, alumina or silica-alumina, are magnesium oxide, titanium dioxide, zirconium oxide, aluminum phosphate etc.

Alternatively, the catalyst may be used in non-supported form or in solid form.

Non-supported catalyst systems, suitable for the present invention can be prepared in solution, for example in an aromatic solvent like toluene, by contacting the metallocene (as a solid or as a solution) with the cocatalyst(s), for example methylaluminoxane and/or a borane or a borate salt previously in an aromatic solvent, or can be prepared by sequentially adding the dissolved catalyst components to the polymerisation medium.

The catalyst system of the invention in solid form, preferably in solid particulate form is generally free from an external carrier, however still being in solid form. By free from an external carrier is meant that the catalyst does not contain an external support, such as an inorganic support, for example, silica or alumina, or an organic polymeric support material.

In order to provide the catalyst system of the invention in solid form but without using an external carrier, it is preferred if a liquid/liquid emulsion system is used. The process involves forming dispersing catalyst components (i) (the complex) and (ii) + optionally (iii) the cocatalysts) in a solvent, and solidifying said dispersed droplets to form solid particles. In particular, the method involves preparing a solution of the catalyst components; dispersing said solution in an solvent to form an emulsion in which said one or more catalyst components are present in the droplets of the dispersed phase; immobilising the catalyst components in the dispersed droplets, in the absence of an external particulate porous support, to form solid particles comprising the said catalyst, and optionally recovering said particles. This process enables the manufacture of active catalyst particles with improved morphology, e.g. with a predetermined particle size, spherical shape, compact structure, excellent surface properties and without using any added external porous support material, such as an inorganic oxide, e.g. silica. The catalyst particles can have a smooth surface, they may be compact in nature and catalyst active components can be distributed uniformly thorough the catalyst particles. Full disclosure of the necessary process steps can be found in, for example, WO 03/051934.

All or part of the preparation steps can be done in a continuous manner. Reference is made to WO 2006/069733 describing principles of such a continuous or semicontinuous preparation methods of the solid catalyst types, prepared via emulsion/solidification method. The formed catalyst preferably has good stability/kinetics in terms of longevity of reaction, high activity and the catalysts enable low ash contents.

The use of the heterogeneous, non-supported catalysts, (i.e. *'self-supported'* catalysts) might have, as a drawback, a tendency to dissolve to some extent in the polymerisation media, i.e. some active catalyst components might leach out of the catalyst particles during slurry polymerisation, whereby the original good morphology of the catalyst might be lost. These leached catalyst components are very active possibly causing problems during polymerisation. Therefore, the amount of leached components should be minimized, i.e. all catalyst components should be kept in heterogeneous form.

Furthermore, the self-supported catalysts generate, due to the high amount of catalytically active species in the catalyst system, high temperatures at the beginning of the polymerisation which may cause melting of the product material. Both effects, i.e. the partial dissolving of the catalyst system and the heat generation, might cause fouling, sheeting and deterioration of the polymer material morphology.

In order to minimise the possible problems associated with high activity or leaching, it is preferred to *'prepolymerise'* the catalyst before using it in polymerisation process. It has to be noted that prepolymerisation in this regard is part of the catalyst preparation process, being a step carried out after a solid catalyst is formed. This catalyst prepolymerisation step is not part of the actual polymerisation configuration, which might comprise a conventional process prepolymerisation step as well. After the catalyst prepolymerisation step, a solid catalyst is obtained and used in polymerisation.

Catalyst *'prepolymerisation'* takes place following the solidification step of the liquid-liquid emulsion process hereinbefore described. Prepolymerisation may take place by known methods described in the art, such as that described in WO 2010/052263, WO 2010/052260 or WO 2010/052264. Use of the catalyst prepolymerisation step offers the advantage of minimising leaching of catalyst components and thus local overheating.

The solvent employed in the processes of the invention may be any solvent suitable for use in olefin polymerisation and is typically a mixture of hydrocarbons. Such solvents are well known in the art. Examples of solvents include hexane, cyclohexane, isohexane, n-heptane, C8, C9 isoparaffins and mixtures thereof.

In one embodiment, the polymerisation is carried out in the presence of hydrogen. Hydrogen is typically employed to help control polymer properties, such as polymer molecular weight. In an alternative embodiment, hydrogen is not added in step (i). The skilled worker will appreciate, however, that hydrogen may be generated during the polymerisation process. Thus, the hydrogen present in the polymerisation reaction mixture formed in step (i) of the process may originate from hydrogen which has been added as a reactant and/or hydrogen produced as a side product during polymerisation.

It will be appreciated that the propylene polymers may contain standard polymer additives. These typically form less than 5.0 wt.-%, such as less than 2.0 wt.-% of the polymer material. Additives, such as antioxidants, phosphites, cling additives, pigments, colorants, fillers, anti-static agent, processing aids, clarifiers and the like may thus be added during the polymerisation process. These additives are well known in the industry and their use will be familiar to the artisan. Any additives which are present may be added as an isolated raw material or in a mixture with a carrier polymer, i.e. in so called master batch.

Use of the propylene-butene random copolymer composition

The present invention relates to an article comprising the propylene-butene random copolymer composition of the invention and as described above and to the use of said propylene-butene random copolymer composition for the production of an article. Preferable articles are moulded articles.

The articles the invention may be employed in a number of end applications, in particular thin wall packaging applications and food or medical packaging applications. The articles of the current invention are especially suitable for containing food and medical items.

**Experimental Part**

**Measurement methods**

*a) Melt Flow Rate*

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR of polypropylene is determined at a temperature of 230 °C and a load of 2.16 kg ($MFR_2$).

*b) Xylene Cold Soluble (XCS)*

Xylene Cold Soluble fraction at room temperature (XCS, wt.%) was determined at 25 °C according to ISO 16152; 5$^{th}$ edition; 2005-07-01.

c) *Flexural Modulus*

The flexural modulus was determined in a 3-point-bending test at 23 °C according to ISO 178 on 80x10x4 mm test bars injection moulded in line with EN ISO 1873-2.

*d) Charpy notched impact strength (NIS)*

The Charpy notched impact strength (NIS) was measured according to ISO 179 1eA at +23 °C, using injection moulded bar test specimens of 80x10x4 mm prepared in accordance with EN ISO 1873-2.

e) *Haze*

Haze determined according to ASTM D1003-00 on 60x60x1 mm plaques injection moulded in line with EN ISO 1873-2. The injection moulded plaques were produced at a melt temperature of 230 °C. Unless otherwise indicated, haze values provided herein are measured on 1 mm thick plaques.

*f) Optomechanical ability (OMA).*

The optomechanical ability (OMA) is the product of Flexural Modulus and Charpy notched impact strength, divided by value for Haze on 1 mm thick injection moulded plaques ($Haze_1$):

$$OMA = (\text{Flexural modulus [MPa]}*\text{NIS [kJ/m}^2\text{]})/\ Haze_1\ [\%].$$

*g) Comonomer determination by NMR spectroscopy*

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125 °C using nitrogen gas for all pneumatics. Approximately 200 mg of material was dissolved in 3 ml of 1,2-tetrachloroethane-$d_2$ (TCE-$d_2$) along with chromium-(III)-acetylacetonate ($Cr(acac)_3$) resulting in a 65 mM solution of relaxation agent in solvent (Singh, G., et al., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., et al., J. Mag. Reson. 187 (2007) 225; Busico, V., et al., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950).

With characteristic signals corresponding to 2,1 erythro regio defects observed (as described in L. Resconi, L. et al., Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the region-defects on determined properties was required. Characteristic signals corresponding to other types of regio defects were not observed.

The comonomer fraction was quantified using the method of Wang et. al. (Wang, W- J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents. For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\delta\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E [wt\%] = 100 * (fE * 28.06) / ((fE * 28.06) + ((1-fE) * 42.08))$$

*h) Differential scanning calorimetry (DSC)*

Differential scanning calorimetry (DSC) analysis, melting temperature ($T_m$) and melt enthalpy ($H_m$), crystallization temperature ($T_c$), and heat of crystallization ($H_c$, $H_{cr}$) are measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C.

Crystallization temperature ($T_c$) and heat of crystallization ($H_c$) are determined from the cooling step, while melting temperature ($T_m$) and melt enthalpy ($H_m$) are determined from the second heating step.

Throughout the description the term $T_c$ or ($T_{cr}$) is understood as Peak temperature of crystallization as determined by DSC at a cooling rate of 10 K/min (i.e. 0.16 K/sec).

*i) Cup test*

From the polymers as defined in the examples cups are produced by injection moulding using an Engel speed 180 machine with a 35 mm barrier screw (supplied by Engel Austria GmbH). The melt temperature was adjusted to 245 °C and the mould temperature to 10 °C. The injection moulding parameters can be optimized by the person skilled in the art. The cycle time is optimized to the minimum whereby the finished part still shows excellent quality, e.g. no wrappage, no angel hair, and other defects. The dimensions of the cups are as follows: Height 100 mm, diameter top 115 mm, diameter bottom 95 mm, bottom wall thickness 0.44 mm, side-wall thickness 0.40 mm. The top load test was performed by compression between two plates attached to a universal testing machine with a test speed of 10 mm/min according to an internal procedure in general agreement with ASTM D642. For testing, the cup is placed upside down (i.e. with the bottom facing the moving plate) into the test setup and compressed to the point of collapse which is noticed by a force drop on the force- deformation curve, for which the maximum force is noted. At least 8 cups are tested to determine an average result.

The drop test is performed on the injection moulded cups. The cups are filled up with water and closed with a lid. During a pre-test the estimated falling height is determined on 10 cups. The final test is to be performed on 20 cups, starting at the pre-determined falling height. For each run 2 cups are dropped. Depending on 2 breaks or 1 break/1 no-break (= neutral) or 2 no-breaks, the next dropping height is chosen to be lower/equal/higher for the next test round. A "break" in the sense of the present test is given as soon as a cup exhibits at least one (visible) crack. In case of 2 breaks, the next dropping height is chosen to be lower; in case of a neutral result, the test is repeated at the same dropping height; in case of a positive result (2 no-breaks), the next dropping height is chosen to be higher. The increase or decrease in height is 0.25 m, only at dropping heights < 1.5 m the increase or decrease is 0.1 m. The final drop height is determined depending on the falling heights of the containers after the first change in trend or after the first "neutral" result according to the following formula:

$$h_e = \Sigma (n_i.h_i)/ n_g$$

wherein

he = drop height
$h_i$ = drop height
$n_i$ = number of containers dropped at the respective height, and
$n_g$ = total number of dropped containers.

## Examples

Base polymer (A)

The following base polymers CC1, CC2, CC3, IC1, IC2, and IC3 have been used in the compositions of the examples according to table 2.

*CC1*

The following metallocene complex MC1 has been used as described in WO 2019/179959 A1:

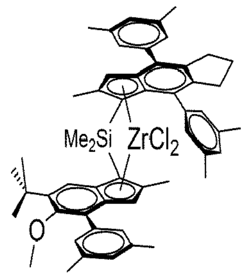

A steel reactor equipped with a mechanical stirrer and a filter net was flushed with nitrogen and the reactor temperature was set to 20 °C. Next silica grade DM-L-303 from AGC Si-Tech Co, pre-calcined at 600 °C (5.0 kg) was added from a feeding drum followed by careful pressuring and depressurising with nitrogen using manual valves. Then toluene (22 kg) was added. The mixture was stirred for 15 min. Next 30 wt.% solution of MAO in toluene (9.0 kg) from Lanxess was added via feed line on the top of the reactor within 70 min. The reaction mixture was then heated up to 90 °C and stirred at 90 °C for additional two hours. The slurry was allowed to settle and the mother liquor was filtered off. The catalyst was washed twice with toluene (22 kg) at 90 °C, following by settling and filtration. The reactor was cooled off to 60 °C and the solid was washed with heptane (22.2 kg). Finally MAO treated $SiO_2$ was dried at 60 °C under nitrogen flow for 2 hours and then for 5 hours under vacuum (-0.5 barg) with stirring. MAO treated support was collected as a free-flowing white powder found to contain 12.2% Al by weight.

30 wt.% MAO in toluene (0.7 kg) was added into a steel nitrogen blanked reactor via a burette at 20 °C. Toluene (5.4 kg) was then added under stirring. The metallocene complex MC1 as described above (93 g) was added from a metal cylinder followed by flushing with 1 kg toluene. The mixture was stirred for 60 minutes at 20 °C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60 °C for 2 h and additionally for 5 h under vacuum (-0.5 barg) under stirring.

Base polymer CC1 was produced in the presence of SSC1 and in a Borstar pilot plant, comprising a reactor sequence consisting of a prepolymerisation reactor, a loop reactor and a (first) gas phase reactor (GPR1). During the production, the conditions in the prepolymerisation reactor are held constant. The temperature is 20 °C, the residence time is 20 min. The concentration of $H_2$ (expressed as H2/C3 for both loop and GPR1), C2 (expressed as C2/C3) are varied during collection.

Conditions for the production of CC1 are given in Figure 1a H2/C3 in loop, Figure 1b C2/C3 in loop, Figure 1c H2/C3 in GPR1, and Figure 1d C2/C3 in GPR1, and Figure 1e split in loop side. CC1 is collected as a mixture of propylene-ethylene copolymers with varying comonomer content, molecular weight and melt flow rate of the individual polymer due to the dynamic process conditions. This mixture, CC1, has a $MFR_2$ of 6.8 g/10min and an ethylene content of 1.8 wt.%. At the start point of collection, the C2 after GPR1 is 1.6 wt.%, $MFR_2$ 9.1 g/10 min, at the end of collection, the C2 after GPR1 is 3.2 wt.%, $MFR_2$ 1.4 g/10 min.

CC2

Base polymer (CC2) was produced in the presence of a non-phthalate based Ziegler-Natta catalyst ZN1. The process details are described in Table 1. Details regarding the catalyst used are disclosed in the earlier application EP 2 999 721 A1.

*CC3*

The preparation of base polymer CC3 has been described in EP 3 257 878 A1, inventive example IE2. Respectively, the Ziegler-Natta catalyst (ZN2) used is also described therein.

*IC1*

The inventive base polymer IC1 was produced in the presence of SSC1 and in a Borstar pilot plant, comprising a reactor sequence consisting of a prepolymerisation reactor, a loop reactor and a (first) gas phase reactor (GPR1). Process and properties are given in Table 1.

*IC2*

The inventive base polymer IC2 was produced in the presence of SSC1 and in a Borstar pilot plant, comprising a reactor sequence consisting of a prepolymerisation reactor, a loop reactor and a (first) gas phase reactor (GPR1). Process and properties are given in Table 1.

*IC3*

The catalyst SCC2 was prepared as follows:
The metallocene complex MC2 (rac-anti-dimethylsilandiyl(2-methyl-4-phenyl-5-methoxy-6-tert-butyl-indenyl)(2-methyl-4-(4-tert-butylphenyl)indenyl)zirconium dichloride) has been synthesized as described in WO 2013/007650.

The catalyst was prepared using metallocene MC2 and a catalyst system of MAO and trityl tetrakis(pentafluorophenyl)borate according to Catalyst 3 of WO 2015/11135 with the proviso that the surfactant is 2,3,3,3-tetrafluoro-2-(1,1,2,2,3,3,3-heptafluoropropoxy)-1-propanol.

The inventive base polymer IC3 was produced in the presence of SSC2 and in a Borstar pilot plant, comprising a reactor sequence consisting of a prepolymerisation reactor, a loop reactor and a (first) gas phase reactor (GPR1). Process and properties are given in Table 1.

Table 1: Polymerisation process parameters

| | | **CC2** | **IC1** | **IC2** | **IC3** |
|---|---|---|---|---|---|
| Pre-polymerisation reactor | | | | | |
| Temperature | [°C] | 30 | 20 | 20 | 20 |
| D-Donor | [g/tC3] | 40 | - | - | - |
| TEAL/propylene | [g/tC3] | 170 | - | - | - |
| Al/D-Donor [Co/ED] | [mol/mol] | 85 | - | - | - |
| Al/Ti [Co/TM] | [mol/mol] | 224 | - | - | - |
| Residence Time | [h] | 0.3 | 0.33 | 0.34 | 0.45 |
| Loop reactor | | | | | |
| Temperature | [°C] | 70 | 70 | 70 | 75 |
| Pressure | [kPa] | 5400 | 4868 | 4948 | 5379 |
| Residence time | [h] | 0.4 | 0.5 | 0.5 | 0.6 |
| Split | [wt%] | 44 | 59 | 51 | 72 |
| H2/C3 ratio | [mol/kmol] | 3.82 | 0.25 | 0.23 | 0.3 |
| C2/C3 ratio | [mol/kmol] | 6.27 | 0 | 0 | 0 |
| C2/C4 ratio | [mol/kmol] | - | 37 | 46.6 | 36 |
| $MFR_2$ | [g/10 min] | 20.6 | 103 | 75 | 29 |
| C2 content | [wt%] | 2.3 | 0 | 0 | 0 |
| C4 content | [wt%] | - | 4.1 | 4.7 | 5.0 |
| First gas-phase reactor | | | | | |
| Temperature | [°C] | 80 | 80 | 80 | 80 |
| Pressure | [kPa] | 2350 | 2500 | 2500 | 2700 |
| Residence time | [h] | 1.5 | 1.8 | 1.9 | 2.0 |
| Split | [wt%] | 56 | 41 | 49 | 28 |
| H2/C3 ratio | [mol/kmol] | 54.9 | 2.8 | 2.8 | 3.1 |
| C2/C3 ratio | [mol/kmol] | 21.12 | 0 | 0 | 0 |
| C2/C4 ratio | [mol/kmol] | - | 29.6 | 36,8 | 36 |

(continued)

| | | | | | |
|---|---|---|---|---|---|
| First gas-phase reactor | | | | | |
| $MFR_2$ | [g/10 min] | 23 | 102 | 85 | 41 |
| C2 content | [wt%] | 3.4 | 0 | 0 | 0 |
| C4 content | [wt%] | 0 | 4.8 | 5.5 | 4.1 |

Nucleating agent (B)

*B1* is Milliad 3988 supplied by Milliken Chemical.
*B2* is Milliad NX8000ECO supplied by Milliken Chemical

Stabilizer (C)

C1 is Irganox B 225, which is an antioxidant commercially available from BASF.
C2 is Irganox B 215, which is an antioxidant commercially available from BASF.
C3 is Ceasit AV FI Veg supplied by Baerlocher.

Antistatic Agent (D)

D1 is GRINDSTED® PS 426 supplied by Danisco (DuPont Group).

Optical brightening agent (E)

E1 is Bright 100 produced by MPI-CHEMIE B.V.

Crosslinking agents (F)

F1 is DHBP-5-IC5 supplied by United Initiators.

Compounding

*CE1, CE2, and IE1-IE5*

The pelletization of the powder of the base polymers CC1, CC2, IC1, IC2, and IC3 and the additives according to table 2 was done in a twin screw extruder with a screw diameter of 18 mm at a melt temperature of 240 °C and a throughput of 7 kg/h.

*CE3*

The mixture of base polymer CC3 and additives according to table 2 was extruded to pellets using a PRISM TSE 16 extruder having a L/D ratio of the screw of 25, under nitrogen atmosphere.

Table 2: Examples

| | | **CE1** | **CE2** | **CE3** | **IE1** | **IE2** | **IE3** | **IE4** | **IE5** |
|---|---|---|---|---|---|---|---|---|---|
| Monomer | | C3 | C3 | C3 | C3 | C3 | C3 | C3 | C3 |
| Comonomer | | C2 | C4 | C4 | C4 | C4 | C4 | C4 | C4 |
| Catalyst | | SSC1 | ZN1 | ZN2 | SSC1 | SSC1 | SSC2 | SSC2 | SSC2 |
| CC1 | [wt%] | 97.17 | | | | | | | |
| CC2 | [wt%] | | 99.12 | | | | | | |
| CC3 | [wt%] | | | 99.65 | | | | | |
| IC1 | [wt%] | | | | 99.8 | | | | |

(continued)

| | | CE1 | CE2 | CE3 | IE1 | IE2 | IE3 | IE4 | IE5 |
|---|---|---|---|---|---|---|---|---|---|
| IC2 | [wt%] | | | | | 99.8 | | | |
| IC3 | [wt%] | | | | | | 99.65 | 99.55 | 99.45 |
| B1 | [wt%] | 0.2 | | 0.2 | 0.2 | 0.2 | 0.2 | 0.3 | 0.2 |
| B2 | [wt%] | | 0.2 | | | | | | |
| C1 | [wt%] | | | 0.1 | | | | | |
| C2 | [wt%] | 0.1 | 0.1 | | | | 0.1 | 0.1 | 0.1 |
| C3 | [wt%] | 0.09 | 0.09 | 0.05 | | | 0.05 | 0.05 | 0.05 |
| D1 | [wt%] | 0.14 | 0.14 | | | | | | |
| E1 | [wt%] | 0.2 | | | | | | | 0.2 |
| F1 | [wt%] | 2.1 | 0.35 | | | | | | |
| $MFR_2$ | [g/10min] | 76 | 80 | 66 | 102 | 85 | 42 | 46 | 42 |
| Tc | [°C] | 116 | 120 | 117 | 121 | 118 | 118 | 118 | 118 |
| Tm | [°C] | 145 | 150 | 148 | 148 | 145 | 147 | 147 | 147 |
| XCS | [wt%] | 1.49 | 7.89 | 3.2 | 0.4 | 0.7 | 1.0 | -* | -* |
| NIS | [$kJ/m^2$] | 3.5 | 4.4 | 4.4 | 2.0 | 2.2 | 3.6 | 3.9 | -* |
| FM | [MPa] | 1203 | 1090 | 1237 | 1518 | 1428 | 1500 | 1547 | -* |
| Haze/1mm | % | 7.0 | 14.8 | 11.4 | 11.6 | 11.0 | 7.6 | 5.8 | 6.9 |
| OMA | [$kJMPa/m^2$] | 595 | 324 | 3205 | 262 | 279 | 3170 | 2273 | -* |
| <2,1> defects | [wt%] | -* | -* | -* | -* | -* | 0.63 | -* | -* |
| * not determined | | | | | | | | | |

As can be seen from the measurement section of Table 2, the inventive examples exhibit lower XCS values than respective comparative examples produced with Ziegler Natta catalysts (CE2 and CE3). Furthermore, in comparison to SSC produced grades (CE1) with lower weight comonomers, the mechanical properties are improved.

Table 3: Cup Tests

| | | CE1 | CE2 | IE1 | IE2 |
|---|---|---|---|---|---|
| Cycle time | [s] | 3.4 | 3.3 | 3 | 3.1 |
| Drop height | [m] | 0.44 | 0.38 | 0.44 | 0.43 |
| Max. Force | [N] | 182.7 | 164.7 | 228.8 | 216.9 |

Table 3 shows that in both comparisons, i.e. Ziegler-Natta with butene or SSC with ethylene, the cup test shows improved max. force (higher stiffness) with similar or higher drop height (toughness) and reduced cycle times for the inventive examples.

## Claims

**1.** A propylene-butene random copolymer composition comprising

A) 98 to 99.99 wt% of a propylene-butene random copolymer based on the total weight of the propylene-butene random copolymer composition, and
B) 0.01 to 1 wt% based on the total weight of propylene-butene random copolymer composition of an alpha

nucleating agent,

the composition having

a) a melt flow rate $MFR_2$ (230 °C/2.16 kg) measured according to ISO 1133 in the range of from 20.0 to below 150.0 g/10 min,
b) a butene content in the range of from 4.0 to 8.5 wt% based on the total weight of the propylene-butene random copolymer, and
c) a relative amount of <2,1> erythro regio-defects in the range of from 0.01 to 1.2 mol%, determined by quantitative $^{13}C$ NMR spectroscopy, as described herein.

2. Propylene-butene random copolymer composition according to claim 1, wherein the propylene-butene random copolymer is obtainable by a polymerisation process using a single side catalyst (SSC), wherein the single side catalyst preferably is a metallocene catalyst comprising a metallocene complex.

3. Propylene-butene random copolymer composition according to claim 3, wherein the metallocene complex comprises at least one cyclopentadienyl or indacenyl ligand and/or wherein the metallocene complex is a hafnocene complex or a zirconocene complex.

4. Propylene-butene random copolymer composition according to any of the preceding claims, wherein the alpha nucleating agent (B) comprises a substituted or unsubstituted dibenzylidene sorbitol compound and/or a substituted or unsubstituted nonitol compound.

5. Propylene-butene random copolymer composition according to any of the preceding claims further comprising:
C) 0.01 to 0.5 wt% based on the total weight of propylene-butene random copolymer composition of a stabilizer.

6. Propylene-butene random copolymer composition according to any of the preceding claims further comprising:
D) 0.01 to 0.5 wt% based on the total weight of propylene-butene random copolymer composition of a antistatic agent.

7. Propylene-butene random copolymer composition according to any of the preceding claims further comprising:
E) 0.01 to 1.0 wt% based on the total weight of propylene-butene random copolymer composition of an optical brightening agent.

8. Propylene-butene random copolymer composition according to any of the preceding claims having a flexural modulus of 1100 to 1600 MPa measured according to ISO 178.

9. Propylene-butene random copolymer composition according to any of the preceding claims having a NIS (23 °C) of 1.8 to 10 $kJ/m^2$ measured according to ISO 179 1eA.

10. Propylene-butene random copolymer composition according to any of the preceding claims having a haze of between 3 and 15% (1 mm plaque) according to ASTM D1003-00.

11. Propylene-butene random copolymer composition according to any of the preceding claims having an optomechnical ability at +23 °C (OMA (+23 °C)) of more than 260 $kJMPa/m^2$, preferably of more than 270 $kJMPa/m^2$, and most preferably of more than 700 $kJMPa/m^2$ as described herein.

12. Propylene-butene random copolymer composition according to any of the preceding claims having at least one melting temperature, $T_m$, determined by DSC according to ISO 11357-3:1999, in a range of from 110 to 160°C.

13. An article comprising a propylene-butene random copolymer composition according to any of the preceding claims.

14. The article according to claim 13, wherein said article is a moulded article, preferably a thin wall packaging article.

15. Use of a propylene-butene random copolymer composition according to claims 1 to 12 for injection moulding and packing applications particularly thin wall packaging.

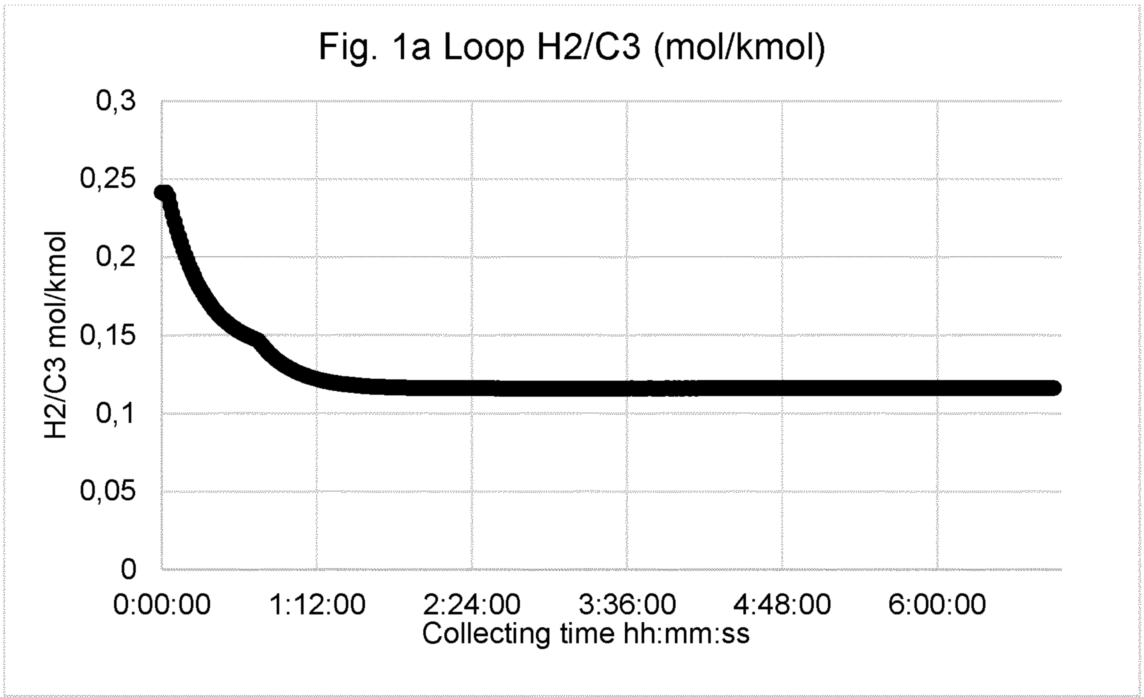
Fig. 1a Loop H2/C3 (mol/kmol)
H2/C3 mol/kmol
0,3
0,25
0,2
0,15
0,1
0,05
0
0:00:00
1:12:00
2:24:00
3:36:00
4:48:00
6:00:00
Collecting time hh:mm:ss

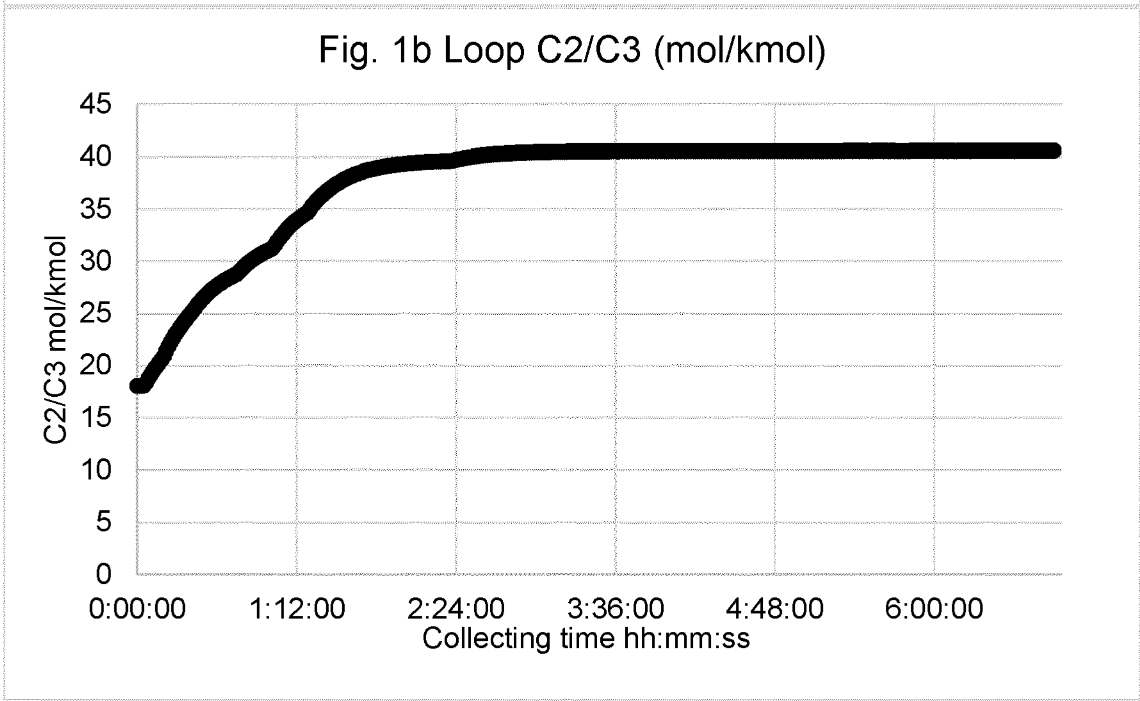
Fig. 1b Loop C2/C3 (mol/kmol)
C2/C3 mol/kmol
45
40
35
30
25
20
15
10
5
0
0:00:00
1:12:00
2:24:00
3:36:00
4:48:00
6:00:00
Collecting time hh:mm:ss

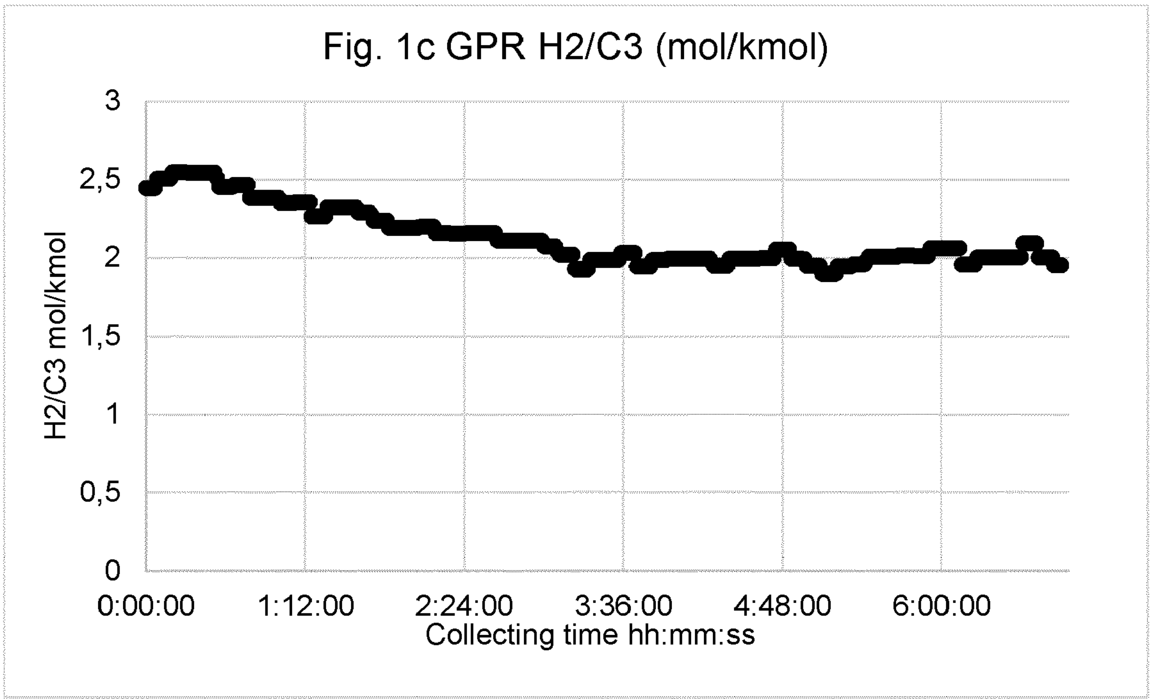
Fig. 1c GPR H2/C3 (mol/kmol)
H2/C3 mol/kmol
3
2,5
2
1,5
1
0,5
0
0:00:00
1:12:00
2:24:00
3:36:00
4:48:00
6:00:00
Collecting time hh:mm:ss

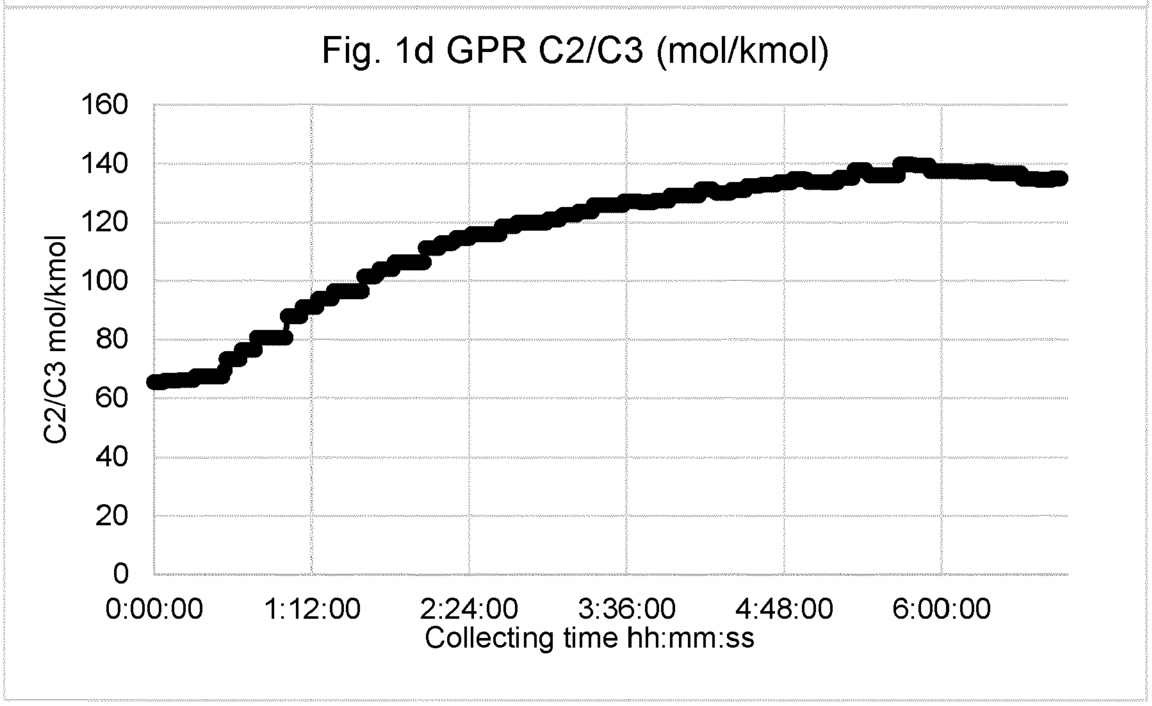
Fig. 1d GPR C2/C3 (mol/kmol)
C2/C3 mol/kmol
160
140
120
100
80
60
40
20
0
0:00:00
1:12:00
2:24:00
3:36:00
4:48:00
6:00:00
Collecting time hh:mm:ss

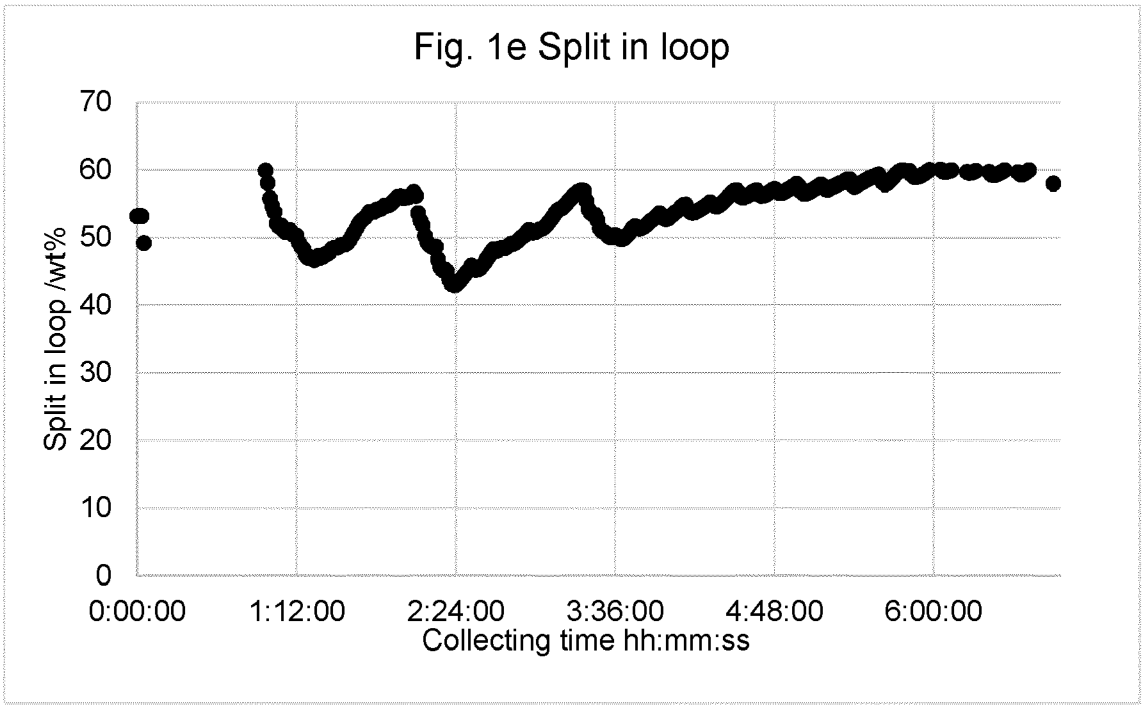
Fig. 1e Split in loop
Split in loop /wt%
70
60
50
40
30
20
10
0
0:00:00
1:12:00
2:24:00
3:36:00
4:48:00
6:00:00
Collecting time hh:mm:ss

Europäisches Patentamt
European Patent Office
Office européen des brevets

# EUROPEAN SEARCH REPORT

Application Number
EP 21 19 8602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 947 143 A1 (BOREALIS TECH OY [FI]) 23 July 2008 (2008-07-23) * example 1 * ----- | 1-15 | INV. C08F210/06 C08L23/14 C08F2/00 C08F4/659 |
| A | EP 2 813 438 A1 (BASELL POLIOLEFINE SRL [IT]) 17 December 2014 (2014-12-17) * examples 1,2 * ----- | 1-15 | |
| X,D<br>A | EP 3 257 878 A1 (BOREALIS AG [AT]) 20 December 2017 (2017-12-20) * examples IE1, IE2 * ----- | 1-9, 11-15<br>10 | |
| A,D | WO 2020/099566 A1 (BOREALIS AG [AT]) 22 May 2020 (2020-05-22) * the whole document * ----- | 1-15 | |
| X | KR 2015 0052804 A (LG CHEMICAL LTD [KR]) 14 May 2015 (2015-05-14) * the whole document * ----- | 1-15 | |

TECHNICAL FIELDS SEARCHED (IPC)

C08F
C08L

The present search report has been drawn up for all claims

1

| Place of search | Date of completion of the search | Examiner |
|---|---|---|
| Munich | 11 May 2022 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 19 8602

This annex lists the patent family members relating to the patent documents cited in the above-mentioned European search report. The members are as contained in the European Patent Office EDP file on
The European Patent Office is in no way liable for these particulars which are merely given for the purpose of information.

11-05-2022

| Patent document cited in search report | Publication date | Patent family member(s) | Publication date |
|---|---|---|---|
| EP 1947143 A1 | 23-07-2008 | CN 101605849 A | 16-12-2009 |
| | | EP 1947143 A1 | 23-07-2008 |
| | | EP 2121830 A1 | 25-11-2009 |
| | | ES 2396793 T3 | 26-02-2013 |
| | | WO 2008087041 A1 | 24-07-2008 |
| EP 2813438 A1 | 17-12-2014 | BR 112015029804 A2 | 25-07-2017 |
| | | CN 105339273 A | 17-02-2016 |
| | | EP 2813438 A1 | 17-12-2014 |
| | | EP 3007984 A1 | 20-04-2016 |
| | | JP 6046838 B2 | 21-12-2016 |
| | | JP 2016524626 A | 18-08-2016 |
| | | KR 20160032042 A | 23-03-2016 |
| | | US 2016176996 A1 | 23-06-2016 |
| | | WO 2014198459 A1 | 18-12-2014 |
| EP 3257878 A1 | 20-12-2017 | CN 109689707 A | 26-04-2019 |
| | | EP 3257878 A1 | 20-12-2017 |
| | | US 2019276571 A1 | 12-09-2019 |
| | | WO 2017216093 A1 | 21-12-2017 |
| WO 2020099566 A1 | 22-05-2020 | BR 112021008970 A2 | 03-08-2021 |
| | | CN 113227172 A | 06-08-2021 |
| | | EP 3880723 A1 | 22-09-2021 |
| | | US 2021395474 A1 | 23-12-2021 |
| | | WO 2020099566 A1 | 22-05-2020 |
| KR 20150052804 A | 14-05-2015 | NONE | |



For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1442078 B1
- WO 2020099566 A1
- WO 2020099563 A1
- EP 3257878 A1
- EP 1989252 B1
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- EP 0887379 A1
- EP 0517868 A1
- WO 9619503 A
- WO 9632420 A
- WO 03051934 A
- WO 2006069733 A
- WO 2010052263 A
- WO 2010052260 A
- WO 2010052264 A
- WO 2019179959 A1
- EP 2999721 A1
- WO 2013007650 A
- WO 201511135 A


### Non-patent literature cited in the description


- **SINGH, G. et al.** *Polymer Testing,* 2009, vol. 28 5, 475
- **ZHOU, Z. et al.** 187. *J. Mag. Reson.,* 2007, 225
- **BUSICO, V. et al.** *Macromol. Rapid Commun.,* 2007, vol. 28, 1128
- **CHENG, H. N.** *Macromolecules,* 1984, vol. 17, 1950
- **L. RESCONI, L. et al.** *Chem. Rev.,* 2000, vol. 100 (4), 1253
- **W-J. WANG ; S. ZHU.** *Macromolecules,* 2000, vol. 33, 1157
- **WANG, W- J. ; ZHU, S.** *Macromolecules,* 2000, vol. 33, 1157
- **WANG, W-J. ; ZHU, S.** *Macromolecules,* 2000, vol. 33, 1157